# EUROPEAN PATENT SPECIFICATION

(11) **EP 2 897 333 B1**
(45) Date of publication and mention of the grant of the patent: **19.10.2016**
(21) Application number: 14151529.6
(22) Date of filing: 17.01.2014
(51) Int. Cl.: H04L 12/813, H04L 12/823, H04L 12/851

(54) **Method for an enhanced communication between a first network node and a second network node of a telecommunications network, and telecommunications network**
Verfahren für verbesserte Kommunikation zwischen einem ersten Netzwerkknoten und einem zweiten Netzwerkknoten eines Telekommunikationsnetzwerks und Telekommunikationsnetzwerk
Procédé pour communication améliorée entre un premier noeud de réseau et un second noeud de réseau d'un réseau de télécommunications et réseau de télécommunications

(43) Date of publication of application: 22.07.2015
(73) Proprietor: Deutsche Telekom AG, 53113 Bonn (DE)
(72) Inventor: Abrahamsson, Mikael, 17159 Solna (SE)
(74) Representative: Schwöbel, Thilo K.

(56) References cited:
- US-A1- 2012 250 678
- US-A1- 2013 155 856

## Description

### BACKGROUND

The present invention relates inter alia to a method for an enhanced communication between a first network node of a telecommunications network and a second network node of the telecommunications network, wherein data packets, comprising communication payload information, are transmitted in the direction from the first network node towards the second network node, wherein the second network node, based on at least one decision parameter - and for a given communication situation of one data packet or a plurality of data packets transmitted towards the second network node and received by the second network node - either transmits /forwards, or drops or delays one or a plurality of data packets.

Furthermore, the present invention relates to a telecommunications network for an enhanced communication between a first network node of the telecommunications network and a second network node of the telecommunications network, the telecommunications network being configured for transmitting data packets, comprising communication payload information, from the first network node towards the second network node, wherein the second network node, based on at least one decision parameter - and for a given communication situation of one data packet or a plurality of data packets transmitted towards the second network node and received by the second network node - either transmits /forwards, or drops or delays one or a plurality of data packets.

Additionally, the present invention relates to a program comprising a computer readable program code and a computer program product for using a telecommunications network comprising a computer program which, when executed on a computer and/or on a first network node of a telecommunications network and/or on a second network node of the telecommunications network, especially in part on the first network node and in part on the second network node, causes the computer and/or the first and/or second network node of the telecommunications network to perform the inventive method.

Telecommunications networks - especially mobile telecommunications networks and fixed line telecommunications networks - are well known. Data transmission within typical telecommunications networks is often performed in a packet-oriented manner, i.e. data packets, comprising communication payload information, are transmitted within the telecommunications network, i.e. between the network nodes of the telecommunications network.

Prior art document US 2012/250678 A1 discloses to schedule the transmission of data streams from a communication node, e.g. a basestation, towards a receiver, e.g. a mobile terminal, wherein the data packets are intended for playout via a reproduction buffer at the receiver. US 2013/155856 A1 discloses a method in a network node for handling TCP traffic in a packet switched network, wherein the network node receives TCP traffic from a mobile node.

In such packet switching telecommunications networks, all transmitted data - regardless of content, type, or structure - is grouped into suitably sized blocks, called packets or data packets. Packet switching telecommunications networks typically feature the delivery of variable bitrate data streams (sequences of packets) over a shared network.

Packet-oriented telecommunications networks may be utilized with or without intermediate forwarding nodes (packet switches or routers) between the considered network nodes.

Typically, various network nodes of such telecommunications networks apply policies regarding the treatment of data packets, especially of incoming data packets. This application of a policy or of a plurality of policies is typically referred to by the term of implementing a firewall or by the application of firewall rules.

Typically, such firewall functionality of network nodes in a telecommunications network comprises a packet filtering functionality, i.e. the firewall functionality constitutes a packet filter firewall functionality. In such a packet filter firewall, packet filters provide the firewall functionality by inspecting the data packets transmitted between the nodes of the telecommunications network. If a data packet (especially an incoming data packet) matches a firewall rule of the packet filter firewall functionality, the corresponding data packet will either be dropped (i.e. silently discarded) or rejected (i.e. discarding the data packet and sending an error message to the transmitting network node of the data packet. Typically, such a packet filter firewall functionality is implemented such that no attention is paid to whether a data packet is part of an existing stream of traffic (or a connection state of the two communicating network nodes); instead, it filters each data packet based only on information contained in the data packet itself (most commonly using a combination of the source and/or destination address of the data packet, of the protocol of the data packet, and, for TCP (Transmission Control Protocol) and UDP (User Datagram Protocol) traffic, the port number of the considered data packet. The TCP and UDP protocols constitute a large part of the communication over the Internet, and these two protocols use different port numbers, or ports, for particular types of traffic (such as web browsing, remote printing, email transmission, file transfer, etc.).

Additionally, such firewall functionality of network nodes might comprise a stateful firewall functionality. A stateful firewall keeps track of the state of network connections between network nodes (such as TCP streams or UDP communication); hence incoming and outgoing data packets are monitored over time, as well as the state of the connection such that filtering decisions are not only based on pre-defined rules, but also on the context of the communication between the considered network nodes. By keeping track of the connection state, stateful firewalls functionality may provide added efficiency in terms of packet inspection, as for existing connections, the firewall functionality only need to check a state table, instead of checking the data packet against a set of rules of the firewall.

However, by implementing a firewall functionality between network nodes within a telecommunications network, a data packet or a plurality of data packets that is or are transmitted from a first network node towards a second network node might be dropped and/or delayed by the second network node. In such a case, the resources used to transmit this data packet or these data packets are lost and perhaps even more resources of the telecommunications network are used for sending back an error message. This is especially disadvantageous in case that at least one of the network nodes involved in the transmission, especially the originating network node (i.e. that sends the data packet or the plurality of data packets towards the other network node), is a network node having a power supply based on a battery and/or an accumulator, such as it is typically the case for mobile devices such as mobile phones, smart phones or mobile computers. In this case, not only resources of the telecommunications network and transmission bandwidth resources of the communication link between the considered network nodes are used, but also limited device-related resources are used for the transmission of a data packet that is ultimately dropped or discarded.

### SUMMARY

An objective of the present invention is to provide a method for an enhanced communication within a telecommunications network, especially between a first network node and a second network node of the telecommunications network, wherein data packets are, at least, transmitted towards the second network node, and wherein the communication is enhanced in that transmission events of data packet that are later on dropped by the destination network node are avoided as completely as possible.

The object of the present invention is achieved by a method for an enhanced communication between a first network node of a telecommunications network and a second network node of the telecommunications network, wherein data packets, comprising communication payload information, are transmitted in the direction from the first network node towards the second network node, wherein the second network node, based on at least one decision parameter - and for a given communication situation of one data packet or a plurality of data packets transmitted towards the second network node and received by the second network node -,
-- either transmits or forwards a considered data packet,
-- or drops a considered data packet,
-- or delays the transmission or forwarding of a considered data packet,
wherein the first network node comprises a decision policy information such that the given communication situation of one data packet or a plurality of data packets is avoided by means of
-- the transmission of the considered data packet from the first network node to the second network node is avoided in case that the considered data packet would otherwise have been dropped by the second network node in the given communication situation, and
-- the transmission of the considered data packet from the first network node to the second network node is delayed by the first network node in case that the considered data packet would otherwise have been delayed by the second network node,
-- the transmission of the considered data packet from the first network node to the second network node is modified by the first network node by either modifying the data packet or by modifying its transmission characteristics in case that the considered data packet would otherwise have been dropped or delayed by the second network node.

According to the present invention it is thereby advantageously possible to enable an enhanced communication within the telecommunications network between at least the first and second network node such that unnecessary transmissions of data packets can be avoided.

According to the present invention, two network nodes of the telecommunications network are considered where data packets are transmitted at least in the direction from the first network node towards the second network node.

The first network node (i.e. the originating network node of the data packet) comprises the decision policy information that allows it to avoid the transmission of a data packet to the second network node (or to avoid the transmission of a data packet to the second network node at a given point in time, i.e. the first network node can delay the transmission) in case that such a packet would have been dropped and/or delayed by the second network node (i.e. the destination network node of the data packet).

According to a preferred embodiment of the present invention, the decision policy information (within the first network node) is related to the at least one decision parameter and the corresponding logic and/or rules within the second network node. This means especially, that the decision policy information is adapted to (or matches) the decision parameter and the corresponding logic and/or rules within the second network node, especially in the sense that the at least one decision parameter of the second network node is either more restrictive or equally restrictive (regarding the treatment of data packets in specific communication situations) as it is defined by the decision policy information within the first network node. Thereby, it can be avoided that data packets are transmitted unnecessarily from the first network node to the second network node (i.e. situations can be avoided where a data packet is first transmitted towards the second network node and then dropped or discarded by the second network node).

Therefore, according to the present invention, in case that a device (or network node) is communicating with another device (or network node) and one or more of the involved devices (or network nodes) have data packet filtering capabilities, at least one of the devices (network nodes) can communicate its filtering policy to the other connected device (or network node) so that this other device is able to use this communicated filter policy to drop the data packet before even attempting to send it to the destination device (or network node), thus improving the efficiency of the whole system.

According to a first exemplary embodiment or application of the method according to the present invention, the method is applied in a mobile data scenario between a mobile device and the base station (acting a first and second network nodes), where the mobile device is most likely battery powered. Both sending data from the mobile device (or user equipment) and receiving data by the mobile device is costly in terms of battery capacity of the mobile device as well as from a whole system perspective because radio frequency usage for the transmission of data packets that are later on dropped is inefficient.
In case that the direction from the base station towards the mobile station is considered, the base station is the first network node and the mobile station (or the user equipment) is the second network node. Accordingly, the decision policy information (within the base station) relates to the at least one decision parameter applied by the mobile station in order to avoid transmitting data packets to be dropped afterwards.
In case that the direction from the mobile station towards the base station is considered, the mobile station (or the user equipment) is the first network node and the base station is the second network node. Accordingly, the decision policy information (within the mobile station) relates to the at least one decision parameter applied by the base station in order to avoid transmitting data packets to be dropped afterwards.
According to the present invention, it is equally possible and preferred that both directions are concerned (i.e. from the base station towards the mobile station, and from the mobile station towards the base station). In this case, the policies are communicated in both ways (i.e. the policy (or decision parameters) applied in the mobile station is communicated to the base station (constituting there the decision policy information), and the policy (or decision parameters) applied in the base station is communicated to the mobile station (constituting there the decision policy information)), both from mobile device and base station, because the mobile network might drop some packets as well, so in some cases it is not useful for the mobile device to send packets to the base station either.

According to a second exemplary embodiment or application of the method according to the present invention, the method is applied in a residential fixed access scenario, where the ISP (Internet Service Provider) aggregation node and the residential device (or customer premises equipment) act a first and second network nodes. The ISP (Internet Service Provider) aggregation node has an ingress policy for what data packets it accepts, at what rate it accepts the data packets, and a policy that might inspect the QoS (Quality of Service) values of data packets and put the data packets in different queues so some data packets will get beneficial forwarding treatment (for instance because they are marked for low latency, low data packet loss forwarding). If the customer premises equipment knows the ISP aggregation node policy then it can make better decisions on queuing strategy, prioritization and drop policy.
In case that the direction from the base ISP aggregation node to the customer premises equipment is considered, the ISP aggregation node is the first network node and the customer premises equipment is the second network node. Accordingly, the decision policy information (within the ISP aggregation node) relates to the at least one decision parameter applied by the customer premises equipment in order to avoid transmitting data packets to be dropped afterwards.
In case that the direction from the customer premises equipment towards the ISP aggregation node is considered, the customer premises equipment is the first network node and the ISP aggregation node is the second network node. Accordingly, the decision policy information (within the customer premises equipment) relates to the at least one decision parameter applied by the ISP aggregation node in order to avoid transmitting data packets to be dropped afterwards.

According to the present invention, the given communication situation (that would result in dropping and/or delaying data packets) is avoided by means of
-- the transmission of the considered data packet from the first network node to the second network node is avoided in case that the considered data packet would otherwise have been dropped by the second network node in the given communication situation, and
-- the transmission of the considered data packet from the first network node to the second network node is delayed by the first network node in case that the considered data packet would otherwise have been delayed by the second network node,
-- the transmission of the considered data packet from the first network node to the second network node is modified by the first network node by either modifying the data packet or by modifying its transmission characteristics in case that the considered data packet would otherwise have been dropped or delayed by the second network node.

In this respect, transmission characteristics correspond to the rate at which the packets are sent and/or in what order they are sent.

According to the present invention, the telecommunications network (used in the inventive method) is a telecommunications network typically comprising a backbone, and a plurality of access nodes in order to provide mobile communication to user equipments (typically in case of a mobile communication network) and/or IP connectivity to a plurality of customer premise equipments (typically in case of a fixed or broadband communication network). The customer premise equipments are connected to the telecommunications network by means of typically different layers of access nodes, e.g. layer 2 access nodes and layer 3 access nodes, wherein the layer 2 access nodes are typically nearer to the customer premise equipments than the layer 3 access nodes. It is equally preferred to apply the inventive method according to the present invention to different access nodes of such a network, e.g. layer 2 access nodes and layer 3 access nodes such that either the layer 2 access node has the role of the first network node and the layer 3 access node has the role of the second network node or vice versa.

According to the present invention, applicable technologies will be all those technologies where there is a cost per bit that is significant (in form of capacity being scarce and/or significant power usage difference between idle and active sending mode), such as satellite based communication, mobile network communication, but also low power networks such as 6LoWPAN networks. Also, if amount of traffic allowed per second is limited to a subrate of what the logical media allows, the transmitting network node (egress node), i.e. the first network node, can do its own packet scheduling, taking into account how the receiver network node will treat the packets.

According to the present invention, it is preferred that the decision parameter and/or the decision policy information is related to at least one out of the following:
-- a characteristics of the considered data packet, especially a characteristics or part of the header information of the data packet,
-- a required bandwidth feature of the communication situation based on the succession and timing of a plurality of data packets,
-- a required quality of service feature of the communication situation based on the succession and timing of a plurality of data packets.

Thereby it is advantageously possible that the decision parameter and the decision policy information can be adapted to a multitude of different situations and use cases.

Furthermore, it is preferred according to the present invention that the first network node and the second network node are directly connected to each other.

According to a further preferred embodiment of the present invention, the first network node and the second network node are connected to each other via other devices or network nodes of the telecommunications network that provide transport functionality for the data packets.

Thereby, it is advantageously possible according to the present invention that the data packets that are avoided to be transmitted between the first and second network node do not need to be treated by the other devices or network nodes of the telecommunications network that provide the transport functionality for the data packets between the first and second network nodes.

Furthermore according to the present invention, it is preferred that the second network node communicates the decision policy information to the first network node.

Thereby, it is advantageously possible according to the present invention that a self-organizing communication is provided between the first and second network nodes; i.e. no supervising or controlling network node needs to manage the transmission of the decision policy information from the second network node towards the first network node.

Still furthermore, it is preferred according to the present invention that a server node of the telecommunications network transmits the decision policy information to the first network node.

Thereby, it is advantageously possible that - either alternatively to transmitting the decision policy information from the second network node towards the first network node in a self-organized manner, or cumulatively to such a functionality - decision policy information can also be transmitted and managed by another node of the telecommunications network, such as a server node (or a provisioning node, transmitting the decision policy information to the first network node, e.g., as part of provisioning information), thereby applying a more centralized propagation of decision policy information.

Furthermore, it is preferred according to the present invention that data packets are also transmitted in the direction from the second network node towards the first network node, wherein the first network node, based on at least one other decision parameter - and for a given communication situation of one data packet or a plurality of data packets transmitted towards the first network node and received by the first network node -,
-- either transmits or forwards a considered data packet,
-- or drops a considered data packet,
-- or delays the transmission or forwarding of a considered data packet,
wherein the second network node comprises a further decision policy information such that the given communication situation of one data packet or a plurality of data packets is avoided by means of
-- the transmission of the considered data packet from the second network node to the first network node is avoided in case that the considered data packet would otherwise have been dropped by the first network node in the given communication situation, and
-- the transmission of the considered data packet from the second network node to the first network node is delayed by the second network node in case that the considered data packet would otherwise have been delayed by the first network node,
-- the transmission of the considered data packet from the second network node to the first network node is modified by the second network node by either modifying the data packet or by modifying its transmission characteristics in case that the considered data packet would otherwise have been dropped or delayed by the first network node.

Thereby, it is advantageously possible that by means of exchanging the decision policy information (for the handling of the transmission of data packets to be sent from the first network node towards the second network node), and the further decision policy information (for the handling of the transmission of data packets to be sent from the second network node towards the first network node), the advantages of the inventive method can be realized in both directions of data transmission between the first and second network nodes simultaneously (i.e. bidirectional data transmission between the first and second network node).

Still furthermore, it is preferred according to the present invention that the decision policy information is transmitted to the first network node in protected manner and/or wherein the further decision policy information is transmitted to the second network node in protected manner. Of course, this also applies to any transmission of the further decision policy information from the first network node towards the second network node.

The protection of the transmission of the decision policy information (and/or the further decision policy information) is especially realized by means of applying an encoding pattern and/or by applying encryption technology, i.e. applying known encryption methods (such as symmetric encryption methods and/or assymmetric methods) to transfer the decision policy information (and/or the further decision policy information). However, it is advantageously possible that other forms of protection of the data transmission are (alternatively or cumulatively to using encoding pattern and/or encryption technology) applied, such as steganography, e.g. in the form of transmitting a comparably important number of different rules of treatment of data packets, wherein of this plurality of different rules of treatment of data packets only a subset are activated; only the data activating the subset of rules constitute the decision policy information / further decision policy information.

The present invention also relates to a telecommunications network for an enhanced communication between a first network node of the telecommunications network and a second network node of the telecommunications network, the telecommunications network being configured for transmitting data packets, comprising communication payload information, from the first network node towards the second network node, wherein the second network node, based on at least one decision parameter - and for a given communication situation of one data packet or a plurality of data packets transmitted towards the second network node and received by the second network node -,
-- either transmits or forwards a considered data packet,
-- or drops a considered data packet,
-- or delays the transmission or forwarding of a considered data packet,
wherein the first network node comprises a decision policy information and the telecommunications network is configured such that the given communication situation of one data packet or a plurality of data packets is avoided by means of
-- the transmission of the considered data packet from the first network node to the second network node is avoided in case that the considered data packet would have been dropped by the second network node in the given communication situation, and
-- the transmission of the considered data packet from the first network node to the second network node is delayed by the first network node in case that the considered data packet would otherwise have been delayed by the second network node,
-- the transmission of the considered data packet from the first network node to the second network node is modified by the first network node by either modifying the data packet or by modifying its transmission characteristics in case that the considered data packet would otherwise have been dropped or delayed by the second network node.

According to the present invention it is thereby advantageously possible to enable an enhanced communication within the telecommunications network between at least the first and second network node such that unnecessary transmissions of data packets can be avoided.

According to the present invention - also with respect to the telecommunications network - it is preferred that the first network node and the second network node are directly connected to each other.

Furthermore according to the present invention - also with respect to the telecommunications network - it is preferred that the first network node and the second network node are connected to each other via other devices or network nodes of the telecommunications network that provide transport functionality for the data packets.

Additionally - also with respect to the telecommunications network - it is preferred that the telecommunications network is configured for transmitting data packets also from the second network node towards the first network node, wherein the first network node, based on at least one other decision parameter - and for a given communication situation of one data packet or a plurality of data packets transmitted towards the first network node and received by the first network node -,
-- either transmits or forwards a considered data packet,
-- or drops a considered data packet,
-- or delays the transmission or forwarding of a considered data packet,
wherein the second network node comprises a further decision policy information and the telecommunications network is configured such that the given communication situation of one data packet or a plurality of data packets is avoided by means of
-- the transmission of the considered data packet from the second network node to the first network node is avoided in case that the considered data packet would otherwise have been dropped by the first network node in the given communication situation, and
-- the transmission of the considered data packet from the second network node to the first network node is delayed by the second network node in case that the considered data packet would otherwise have been delayed by the first network node,
-- the transmission of the considered data packet from the second network node to the first network node is modified by the second network node by either modifying the data packet or by modifying its transmission characteristics in case that the considered data packet would otherwise have been dropped or delayed by the first network node.

Furthermore, the present invention relates to a program comprising a computer readable program code which, when executed on a computer and/or on a first network node of a telecommunications network and/or on a second network node of the telecommunications network, especially in part on the first network node and in part on the second network node, causes the computer and/or the first and/or second network node of the telecommunications network to perform the inventive method.

The present invention also relates to computer program product for using a core network of a telecommunications network, the computer program product comprising a computer program stored on a storage medium, the computer program comprising program code which, when executed on a computer and/or on a first network node of a telecommunications network and/or on a second network node of the telecommunications network, especially in part on the first network node and in part on the second network node, causes the computer and/or the first and/or second network node of the telecommunications network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a conventional telecommunications network comprising an access node, and a plurality of customer premise equipments are connected to the telecommunications network.
Figure 2 schematically illustrates a telecommunications network for providing mobile communication to a plurality of user equipments or mobile devices.
Figure 3 schematically illustrates a first network node and a second network that are connected to one another for transmitting data packets from the first network node towards the second network node.
Figure 4 schematically illustrates a first network node and a second network that are connected to one another via other network nodes such that it is possible to transmit data packets from the first network node towards the second network node.
Figure 5 schematically illustrates a first network node, a second network, the decision policy information being transmitted from the second network node towards the first network node.
Figure 6 schematically illustrates a first network node, a second network, and a server node of the telecommunications network.
Figure 7 schematically illustrates a first network node and a second network that are connected to one another for transmitting data packets from the first network node towards the second network node, as well as from the second network node towards the first network node.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

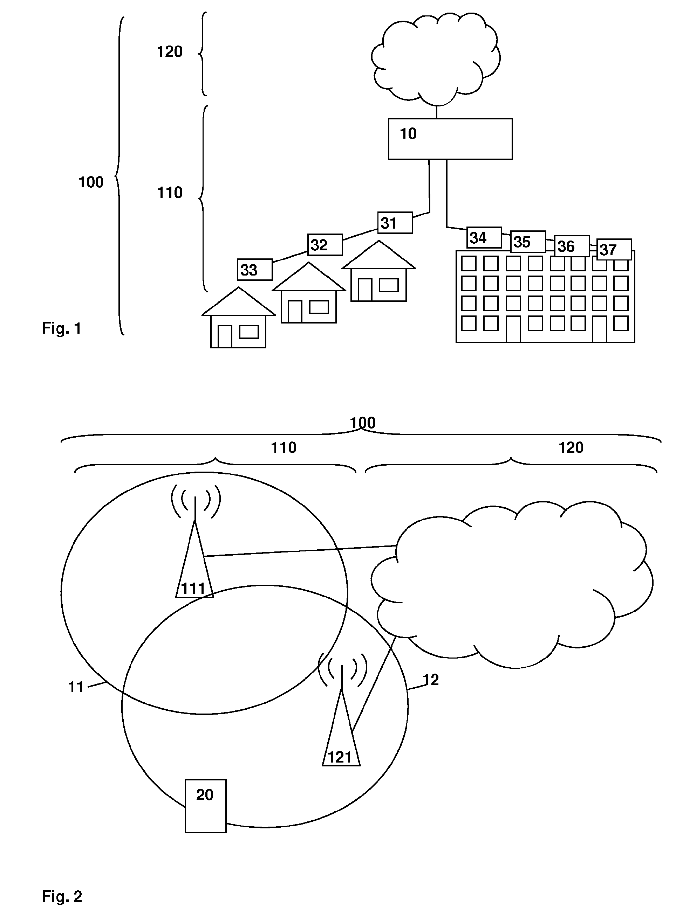

In Figure 1, a conventional fixed line telecommunications network 100 is schematically shown, wherein the telecommunications network 100 comprises an access network 110 and a backbone 120. The access network 110 typically comprises a plurality of access nodes. Only one such access node 10 is schematically represented in Figure 1. Furthermore, the access network comprises a plurality of customer premises equipments 31, 32, 33, 34, 35, 36, 37. Typically, the access network 110 furthermore comprises not only one layer of access nodes but further layers of access nodes (not depicted in Figure 1). Such a telecommunications network 100 is typically used to provide broadband connectivity to the plurality of customer premises equipments 31, 32, 33, 34, 35, 36, 37, especially internet (Internet Protocol) connectivity and/or broadcast or multicast content such as entertainment content or other contents.

In Figure 2, a conventional mobile telecommunications network 100 is schematically shown, wherein the telecommunications network 100 comprises an access network 110 and a backbone 120 or a core network 120. The access network 110 typically comprises a plurality of base stations (or base station entities). Only two such base station entities (or base stations) 111, 121 are schematically represented in Figure 2. Typically, such a mobile telecommunications network 100 comprises a plurality of user equipments or mobile devices, only one user equipment (or mobile device) 20 is schematically represented in Figure 2. Such a telecommunications network 100 is typically used to provide mobile communication to the connected user equipments or mobile devices 20.

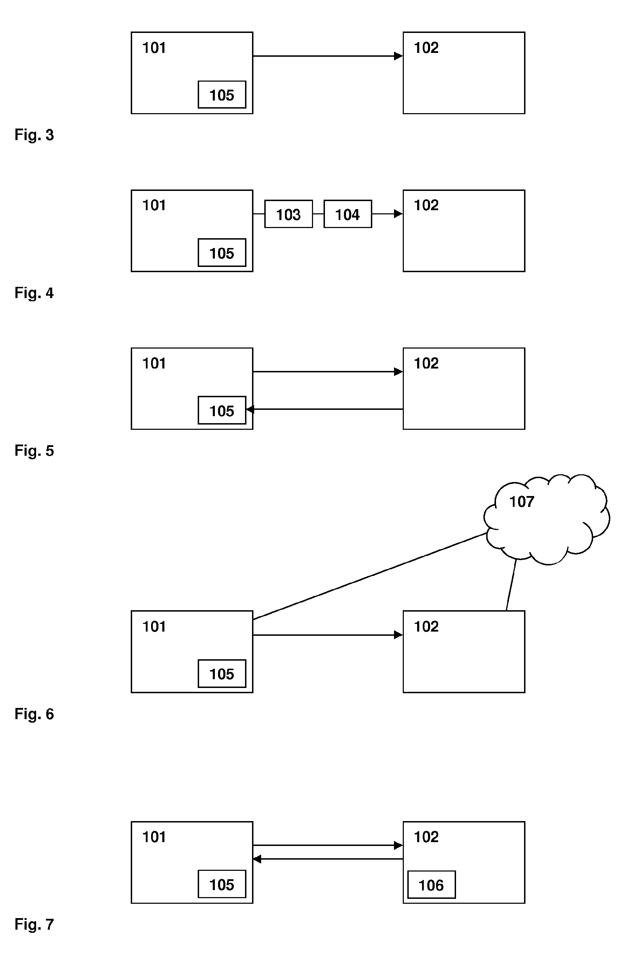

Figures 1 and 2 only schematically show two main fields of application of the present invention, namely fixed line telecommunications networks, and mobile communication networks. Within each of such telecommunications networks, a multitude of different network nodes exist. Basically, the invention refers to the communication between any such network nodes, wherein in a first step, only a unidirectional communication from a first network node towards a second network node is considered. The first and second network node according to the present invention can - at least in principle - be any network nodes of the telecommunications network. However, the invention is primarily explained with references to the first and second network nodes being either a mobile device 20 (or user equipment) and a base station 111, 121 of a mobile communication network, or being an ISP (Internet Service Provider) aggregation node 10 and a residential device 31, 32, 33, 34, 35, 36, 36 (or customer premises equipment). The configurations of the first and second network node according to the present invention, are schematically shown in Figures 3 to 7.

In Figures 3 to 7 respectively, a first network node 101 is connected to a second network node 102, wherein typically both network nodes 101, 102 are part of (or are at least connected to) a telecommunications network 100 as shown in Figures 1 and 2. According to the present invention, an enhanced communication is realized between the first network node 101 of the telecommunications network 100 and the second network node 102 of the telecommunications network 100. Data packets, comprising communication payload information, are transmitted in the direction from the first network node 101 towards the second network node 102. The second network node 102 either transmits or forwards a considered data packet, or drops the considered data packet, or delays the transmission or forwarding of a considered data packet. This is done by the second network node 102 based on at least one decision parameter, and for a given communication situation of one data packet or a plurality of data packets transmitted towards the second network node 102 and received by the second network node 102.

According to the present invention, the first network node 101 comprises a decision policy information 105 (shown in each of Figures 3 to 7) such that the given communication situation of one data packet or a plurality of data packets is avoided by means of
-- the transmission of the considered data packet from the first network node 101 to the second network node 102 is avoided in case that the considered data packet would otherwise have been dropped by the second network node 102 in the given communication situation, and
-- the transmission of the considered data packet from the first network node 101 to the second network node 102 is delayed by the first network node 101 in case that the considered data packet would otherwise have been delayed by the second network node 102,
-- the transmission of the considered data packet from the first network node 101 to the second network node 102 is modified by the first network node 101 by either modifying the data packet or by modifying its transmission characteristics in case that the considered data packet would otherwise have been dropped or delayed by the second network node 102.

Preferably, the decision parameter (of the second network node 102) and/or the decision policy information (of the first network node 101) is related to at least one out of the following:
-- a characteristics of the considered data packet, especially a characteristics or part of the header information of the data packet,
-- a required bandwidth feature of the communication situation based on the succession and timing of a plurality of data packets,
-- a required quality of service feature of the communication situation based on the succession and timing of a plurality of data packets.

Especially, the second network node might apply a certain maximum data transmission bandwidth, i.e. a communication situation where data packets (comprising a certain data volume) are only accepted by the second network node 102 up to a given maximum rate; above that maximum rate, data packets received by the second network node 102 are either dropped or delayed. According to the present invention, by means of the decision policy information 105 that is accessible to the first network node 101 (especially the decision policy information 105 is stored in a memory device in the first network node 101), the first network node 101, when sending the data packets towards the second network node 102, makes sure that the maximum rate of transmission of data packet is not exceeded and thus avoids a communication situation where the bandwidth limitation of the second network node 102 is exceeded.

The configuration of Figure 3 shows the first and second network node 101, 102 coupled directly with one another. Alternatively and as represented in Figure 4, the first and second network node 101, 102 might be indirectly connected via further network nodes, schematically designated by means of reference signs 103 and 104.

According to a preferred embodiment, represented in Figure 5, the decision policy information 105 is transmitted from the second network node 102 towards the first network node 101. According to another preferred embodiment, represented in Figure 6, the decision policy information 105 is transmitted towards the first network node 101 by a server node 107 of the telecommunications network 100. This is either possible according to the present invention by means of transmitting the decision policy information 105 in a first step towards the server node 107, and in a second step towards the first network node 101. Alternatively, the server node 105 is aware of the at least one decision parameter applied in the second network node 102, and the decision policy information 105 only needs to be transmitted, by the server node 107, towards the first network node 101. It is possible and preferred according to the present invention that the distribution of the decision policy information 105 is performed either solely by direct transmission between the respective network nodes (i.e. from the second network node 102 towards the first network node 101, as depicted in Figure 5), or solely by distribution via the server node 107 (as depicted in Figure 6), or by a combination of both - either that a first part of the decision policy information (relating, e.g., to a first packet handling rule) is transmitted to the first network node 101 directly from the second network node 102, and that a second part of the decision policy information (relating, e.g, to a second packet handling rule) is transmitted to the first network node 101 via the server node 107, or that different parts of the decision policy information 105 are needed from the second network node 102 and from the server node 107 in order to implement, in the first network node 101, one specific packet handling rule.

In Figure 7, an example of the first and second network nodes 101, 102 is schematically represented where both network nodes are connected to one another (either directly or indirectly via other network nodes (not depicted)) for transmitting data packets from the first network node 101 towards the second network node 102, as well as from the second network node 102 towards the first network node 101. Accordingly, a bidirectional communication (of payload data) occurs between the first and second network node 101, 102. By application of the inventive method to both directions of the data transmission, the first network node 101 comprises the decision policy information 105 (as mentioned in relation to the embodiments mentioned above), and the second network node 102 comprises a further decision policy information 106. As the decision policy information 105, the further decision policy information 106 (within the second network node 102) is related to the at least one other decision parameter (of the first network node 101) and the corresponding logic and/or rules within the first network node 101. This means especially, that the further decision policy information 106 is adapted to (or matches) the decision parameter and the corresponding logic and/or rules within the first network node 101, especially in the sense that the at least one other decision parameter of the first network node 101 is either more restrictive or equally restrictive (regarding the treatment of data packets in specific communication situations) as it is defined by the further decision policy information 106 within the second network node 102. Thereby, it can be avoided that data packets are transmitted unnecessarily from the second network node 102 to the first network node 101 (i.e. situations can be avoided where a data packet is first transmitted towards the first network node 101 and then dropped or discarded by the first network node 101).

An application scenario of the present invention is for example a mobile phone / mobile device 20 (as second network node 102) being connected to a mobile network 100, i.e. to a base station entity or base station 111, as first network node 101. The mobile phone / user equipment / mobile device 20 has a built-in policy to not allow incoming connections for TCP ports between 0-1023 by default, but has some exceptions for management stations. According to the present invention, it can be avoided that data packets matching this packet dropping policy are transmitted to the mobile device / user equipment 20, i.e. towards the second network node 102, and subsequently dropped. According to the present invention, the policy (of dropping data packets matching certain criteria) is communicated (as decision policy information 105) to the first network node 101 (i.e. to the mobile base station 111, 121) resulting in avoiding such communication situations where data packets matching the filter are first transmitted to the second network node 102 and then dropped there.

Another application scenario of the present invention refers to a device (as second network node 102) which is being sent traffic that it is not interested in, for instance there is a Denial of Service attack aimed at it or something it provides service for. According to the present invention, a policy to avoid packets of a certain type or above a certain incoming rate is communicated to the (sending) first network node 101, i.e. an upstream device which helps to filter packets before such packets are even transmitted on the link between the upstream device and the considered device (second network node 102).

## Claims

1. Method for an enhanced communication between a first network node (101) of a telecommunications network (100) and a second network node (102) of the telecommunications network (100), wherein data packets, comprising communication payload information, are transmitted in the direction from the first network node (101) towards the second network node (102), wherein the second network node (102), based on at least one second decision parameter - and for a given communication situation of one data packet or a plurality of data packets transmitted towards the second network node (102) and received by the second network node (102) -,
-- either transmits or forwards a considered data packet,
-- or drops a considered data packet,
-- or delays the transmission or forwarding of a considered data packet,
wherein the first network node (101) comprises a first decision policy information (105) comprising at least one first decision parameter and a first logic and/or first rules such that the given communication situation of one data packet or a plurality of data packets is avoided by means of
-- the transmission of the considered data packet from the first network node (101) to the second network node (102) is avoided in case that the considered data packet would otherwise have been dropped by the second network node (102) in the given communication situation, and
-- the transmission of the considered data packet from the first network node (101) to the second network node (102) is delayed by the first network node (101) in case that the considered data packet would otherwise have been delayed by the second network node (102),
-- the transmission of the considered data packet from the first network node (101) to the second network node (102) is modified by the first network node (101) by either modifying the data packet or by modifying its transmission characteristics in case that the considered data packet would otherwise have been dropped or delayed by the second network node (102),
wherein the second network node (102) comprises at least one second decision policy information (106) comprising the at least one second decision parameter and a second logic and/or second rules, wherein the method comprises the steps of:communicating the second decision policy information (106) to the first network node (101) by the second network node (102) and/or by a server node (107) of the telecommunications network (100);
-- adapting the at least one first decision parameter and/or the first logic and/or the first rules to the at least one second parameter and/or the second logic and/or the second rules in case the at least one second decision parameter and/or the second logic and/or the second rules is/are more restrictive or equally restrictive regarding a treatment of the data packets, comprising the communication payload information.

2. Method according to claim 1, wherein the decision parameter and/or the decision policy information is related to at least one out of the following:
-- a characteristics of the considered data packet, especially a characteristics or part of the header information of the data packet,
-- a required bandwidth feature of the communication situation based on the succession and timing of a plurality of data packets,
-- a required quality of service feature of the communication situation based on the succession and timing of a plurality of data packets.

3. Method according to claim 1 or 2, wherein the first network node (101) and the second network node (102) are directly connected to each other.

4. Method according to claim 1 or 2, wherein the first network node (101) and the second network node (102) are connected to each other via other devices or network nodes of the telecommunications network (100) that provide transport functionality for the data packets.

5. Method according to one of the preceding claims, wherein data packets are also transmitted in the direction from the second network node (102) towards the first network node (101), wherein the first network node (101), based on the at least one first decision parameter - and for a given communication situation of one data packet or a plurality of data packets transmitted towards the first network node (101) and received by the first network node (101) -,
-- either transmits or forwards a considered data packet,
-- or drops a considered data packet,
-- or delays the transmission or forwarding of a considered data packet,
wherein the second network node (102) comprises the second decision policy information (106) comprising the at least one second decision parameter and the second logic and/or the second rules such that the given communication situation of one data packet or a plurality of data packets is avoided by means of
-- the transmission of the considered data packet from the second network node (102) to the first network node (101) is avoided in case that the considered data packet would otherwise have been dropped by the first network node (101) in the given communication situation, and
-- the transmission of the considered data packet from the second network node (102) to the first network node (101) is delayed by the second network node (102) in case that the considered data packet would otherwise have been delayed by the first network node (101),
-- the transmission of the considered data packet from the second network node (102) to the first network node (101) is modified by the second network node (102) by either modifying the data packet or by modifying its transmission characteristics in case that the considered data packet would otherwise have been dropped or delayed by the first network node (101), wherein the method comprises the steps of:-communicating the at least one first decision policy information (105) to the second network node (102) by the first network node (101) and/or by the server node (107) of the telecommunications network (100);
-- adapting the at least one second decision parameter and/or the second logic and/or the second rules to the at least one first parameter and/or the first logic and/or the first rules in case the first decision parameter and/or the at least one first logic and/or the first rules is/are more restrictive or equally restrictive regarding a treatment of the data packets, comprising the communication payload information.

6. Method according to one of the preceding claims, wherein the decision policy information (105) is transmitted to the first network node (101) in a protected manner and/or wherein the further decision policy information (106) is transmitted to the second network node (102) in a protected manner.

7. Telecommunications network (100) for an enhanced communication between a first network node (101) of the telecommunications network (100) and a second network node (102) of the telecommunications network (100), the telecommunications network (100) being configured for transmitting data packets, comprising communication payload information, from the first network node (101) towards the second network node (102), wherein the second network node (102), based on at least one second decision parameter - and for a given communication situation of one data packet or a plurality of data packets transmitted towards the second network node (102) and received by the second network node (102) -,
-- either transmits or forwards a considered data packet,
-- or drops a considered data packet,
-- or delays the transmission or forwarding of a considered data packet,
wherein the first network node (101) comprises a first decision policy information (105) comprising at least one first decision parameter and a first logic and/or first rules and the telecommunications network (100) is configured such that the given communication situation of one data packet or a plurality of data packets is avoided by means of
-- the transmission of the considered data packet from the first network node (101) to the second network node (102) is avoided in case that the considered data packet would have been dropped by the second network node (102) in the given communication situation, and
-- the transmission of the considered data packet from the first network node (101) to the second network node (102) is delayed by the first network node (101) in case that the considered data packet would otherwise have been delayed by the second network node (102),
-- the transmission of the considered data packet from the first network node (101) to the second network node (102) is modified by the first network node (101) by either modifying the data packet or by modifying its transmission characteristics in case that the considered data packet would otherwise have been dropped or delayed by the second network node (102),
wherein the second network node (102) comprises a second decision policy information (106), wherein the second network node (102) is configured to communicate the second decision policy information (106) to the first network node (101) and/or wherein a server node (107) of the telecommunications network (100) is configured to transmit the second decision policy information (106) to the first network node (101), wherein the at least one first decision parameter and/or the first logic and/or the first rules are configured to be adapted to the at least one second parameter and/or the second logic and/or the second rules in case the at least one second decision parameter and/or the second logic and/or the second rules is/are more restrictive or equally restrictive regarding a treatment of the data packets, comprising the communication payload information.

8. Telecommunications network (100) according to claim 7, wherein the first network node (101) and the second network node (102) are directly connected to each other.

9. Telecommunications network (100) according to claim 7, wherein the first network node (101) and the second network node (102) are connected to each other via other devices or network nodes of the telecommunications network (100) that provide transport functionality for the data packets.

10. Telecommunications network (100) according to one of claims 7 to 9, wherein the telecommunications network (100) is configured for transmitting data packets also from the second network node (102) towards the first network node (101), wherein the first network node (101), based on at least one other decision parameter - and for a given communication situation of one data packet or a plurality of data packets transmitted towards the first network node (101) and received by the first network node (101) -,
-- either transmits or forwards a considered data packet,
-- or drops a considered data packet,
-- or delays the transmission or forwarding of a considered data packet,
wherein the second network node (102) comprises the second decision policy information (106) comprising the at least one second decision parameter and the second logic and/or the second rules and the telecommunications network (100) is configured such that the given communication situation of one data packet or a plurality of data packets is avoided by means of
-- the transmission of the considered data packet from the second network node (102) to the first network node (101) is avoided in case that the considered data packet would otherwise have been dropped by the first network node (101) in the given communication situation, and
-- the transmission of the considered data packet from the second network node (102) to the first network node (101) is delayed by the second network node (102) in case that the considered data packet would otherwise have been delayed by the first network node (101),
-- the transmission of the considered data packet from the second network node (102) to the first network node (101) is modified by the second network node (102) by either modifying the data packet or by modifying its transmission characteristics in case that the considered data packet would otherwise have been dropped or delayed by the first network node (101), wherein the first network node (101) is configured to communicate the first decision policy information (105) to the second network node (102) and/or wherein the server node (107) of the telecommunications network (100) is configured to transmit the at least one first decision policy information (105) to the second network node (102), wherein the at least one second decision parameter and/or the second logic and/or the second rules are configured to be adapted to the at least one first parameter and/or the first logic and/or the first rules in case the at least one first decision parameter and/or the first logic and/or the first rules is/are more restrictive or equally restrictive regarding a treatment of the data packets, comprising the communication payload information.

11. Program comprising a computer readable program code which, when executed on a computer and/or on a first network node (101) of a telecommunications network (100) and/or on a second network node (102) of the telecommunications network (100), especially in part on the first network node (101) and in part on the second network node (102), causes the computer and/or the first and/or second network node (101, 102) of the telecommunications network (100) to perform all the steps of the method according one of claims 1 to 6.

12. Computer program product for using a telecommunications network (100), the computer program product comprising a computer program stored on a storage medium, the computer program comprising program code which, when executed on a computer and/or on a first network node (101) of a telecommunications network (100) and/or on a second network node (102) of the telecommunications network (100), especially in part on the first network node (101) and in part on the second network node (102), causes the computer and/or the first and/or second network node (101, 102) of the telecommunications network (100) to perform all the steps of the method according one of claims 1 to 6.

## Patentansprüche

1. Verfahren für eine verbesserte Kommunikation zwischen einem ersten Netzknoten (101) eines Telekommunikationsnetzes (100) und einem zweiten Netzknoten (102) des Telekommunikationsnetzes (100), wobei Datenpakete, die Kommunikationsnutzdateninformationen umfassen, in der Richtung von dem ersten Netzknoten (101) in Richtung des zweiten Netzknotens (102) gesendet werden, wobei der zweite Netzknoten (102) auf der Basis mindestens eines zweiten Entscheidungsparameters - und für eine gegebene Kommunikationssituation eines einzelnen Datenpaketes oder mehrerer Datenpakete, die in Richtung des zweiten Netzknotens (102) gesendet und durch den zweiten Netzknoten (102) empfangen werden -,
- ein in Betracht gezogenes Datenpaket entweder sendet oder weiterleitet,
- oder ein in Betracht gezogenes Datenpaket abwirft,
- oder die Übertragung oder Weiterleitung eines in Betracht gezogenen Datenpaketes verzögert,
wobei der erste Netzknoten (101) eine erste Entscheidungsvorschrift-Information (105) umfasst, der mindestens eine erste Entscheidungsparameter und eine erste Logik und/oder erste Regeln umfasst, dergestalt, dass die gegebene Kommunikationssituation eines einzelnen Datenpaketes oder mehrerer Datenpakete folgendermaßen vermieden wird:
- die Übertragung des in Betracht gezogenen Datenpaketes von dem ersten Netzknoten (101) zu dem zweiten Netzknoten (102) wird für den Fall vermieden, dass das in Betracht gezogene Datenpaket anderenfalls durch den zweiten Netzknoten (102) in der gegebenen Kommunikationssituation abgeworfen worden wäre, und
- die Übertragung des in Betracht gezogenen Datenpaketes von dem ersten Netzknoten (101) zu dem zweiten Netzknoten (102) wird durch den ersten Netzknoten (101) für den Fall verzögert, dass das in Betracht gezogene Datenpaket anderenfalls durch den zweiten Netzknoten (102) verzögert worden wäre,
- die Übertragung des in Betracht gezogenen Datenpaketes von dem ersten Netzknoten (101) zu dem zweiten Netzknoten (102) wird durch den ersten Netzknoten (101) entweder durch Modifizieren des Datenpaketes oder durch Modifizieren seiner Übertragungseigenschaften für den Fall modifiziert, dass das in Betracht gezogene Datenpaket anderenfalls durch den zweiten Netzknoten (102) abgeworfen oder verzögert worden wäre,
wobei der zweite Netzknoten (102) mindestens eine zweite Entscheidungsvorschrift-Information (106) umfasst, die mindestens einen zweiten Entscheidungsparameter und eine zweite Logik und/oder zweite Regeln umfasst, wobei das Verfahren folgende Schritte umfasst:
- Übermitteln der zweiten Entscheidungsvorschrift-Information (106) zu dem ersten Netzknoten (101) durch den zweiten Netzknoten (102) und/oder durch einen Serverknoten (107) des Telekommunikationsnetzes (100);
- Anpassen des mindestens einen ersten Entscheidungsparameters und/oder der ersten Logik und/oder der ersten Regeln an den mindestens einen zweiten Parameter und/oder die zweite Logik und/oder die zweiten Regeln für den Fall, dass der mindestens eine zweite Entscheidungsparameter und/oder die zweite Logik und/oder die zweiten Regeln bezüglich einer Behandlung der Datenpakete, die die Kommunikationsnutzdateninformationen umfassen, mindestens ebenso restriktiv sind.

2. Verfahren nach Anspruch 1, wobei der Entscheidungsparameter und/oder die Entscheidungsvorschrift-Information sich auf mindestens eines von Folgendem beziehen:
- eine Eigenschaft des in Betracht gezogenen Datenpaketes, insbesondere eine Eigenschaft oder ein Teil der Header-Informationen des Datenpaket,
- ein erforderliches Bandbreitenmerkmal der Kommunikationssituation auf der Basis der Abfolge und des Timings mehrerer Datenpakete,
- ein erforderliches Dienstqualitätsmerkmal der Kommunikationssituation auf der Basis der Abfolge und des Timings mehrerer Datenpakete.

3. Verfahren nach Anspruch 1 oder 2, wobei der erste Netzknoten (101) und der zweite Netzknoten (102) direkt miteinander verbunden sind.

4. Verfahren nach Anspruch 1 oder 2, wobei der erste Netzknoten (101) und der zweite Netzknoten (102) über andere Vorrichtungen oder Netzknoten des Telekommunikationsnetzes (100) miteinander verbunden sind, die eine Transportfunktionalität für die Datenpakete bereitstellen.

5. Verfahren nach einem der vorangehenden Ansprüche, wobei Datenpakete auch in der Richtung von dem zweiten Netzknoten (102) in Richtung des ersten Netzknotens (101) gesendet werden, wobei der erste Netzknoten (101) auf der Basis des mindestens einen ersten Entscheidungsparameters
- und für eine gegebene Kommunikationssituation eines einzelnen Datenpaketes oder mehrerer Datenpakete, die in Richtung des ersten Netzknotens (101) gesendet und durch den ersten Netzknoten (101) empfangen werden -,
- ein in Betracht gezogenes Datenpaket entweder sendet oder weiterleitet,
- oder ein in Betracht gezogenes Datenpaket abwirft,
- oder die Übertragung oder Weiterleitung eines in Betracht gezogenen Datenpaketes verzögert,
wobei der zweite Netzknoten (102) die zweite Entscheidungsvorschrift-Information (106) umfasst, die den mindestens einen zweiten Entscheidungsparameter und die zweite Logik und/oder die zweiten Regeln umfasst, dergestalt, dass die gegebene Kommunikationssituation eines einzelnen Datenpaketes oder mehrerer Datenpakete folgendermaßen vermieden wird:
- die Übertragung des in Betracht gezogenen Datenpaketes von dem zweiten Netzknoten (102) zu dem ersten Netzknoten (101) wird für den Fall vermieden, dass das in Betracht gezogene Datenpaket anderenfalls durch den ersten Netzknoten (101) in der gegebenen Kommunikationssituation abgeworfen worden wäre, und
- die Übertragung des in Betracht gezogenen Datenpaketes von dem zweiten Netzknoten (102) zu dem ersten Netzknoten (101) durch den zweiten Netzknoten (102) für den Fall verzögert wird, dass das in Betracht gezogene Datenpaket anderenfalls durch den ersten Netzknoten (101) verzögert worden wäre,
- die Übertragung des in Betracht gezogenen Datenpaketes von dem zweiten Netzknoten (102) zu dem ersten Netzknoten (101) durch den zweiten Netzknoten (102) entweder durch Modifizieren des Datenpaketes oder durch Modifizieren seiner Übertragungseigenschaften für den Fall modifiziert wird, dass das in Betracht gezogene Datenpaket durch den ersten Netzknoten (101) anderenfalls abgeworfen oder verzögert worden wäre, wobei das Verfahren folgende Schritte umfasst:
- Übermitteln der mindestens einen ersten Entscheidungsvorschrift-Information (105) zu dem zweiten Netzknoten (102) durch den ersten Netzknoten (101) und/oder durch den Serverknoten (107) des Telekommunikationsnetzes (100);
- Anpassen des mindestens einen zweiten Entscheidungsparameters und/oder der zweiten Logik und/oder der zweiten Regeln an den mindestens einen ersten Parameter und/oder die erste Logik und/oder die ersten Regeln für den Fall, dass der erste Entscheidungsparameter und/oder die mindestens eine erste Logik und/oder die ersten Regeln bezüglich einer Behandlung der Datenpakete, die die Kommunikationsnutzdateninformationen umfassen, mindestens ebenso restriktiv sind.

6. Verfahren nach einem der vorangehenden Ansprüche, wobei die Entscheidungsvorschrift-Information (105) in einer geschützten Weise zu dem ersten Netzknoten (101) gesendet wird, und/oder wobei die weitere Entscheidungsvorschrift-Information (106) in einer geschützten Weise zu dem zweiten Netzknoten (102) gesendet wird.

7. Telekommunikationsnetz (100) für eine verbesserte Kommunikation zwischen einem ersten Netzknoten (101) des Telekommunikationsnetzes (100) und einem zweiten Netzknoten (102) des Telekommunikationsnetzes (100), wobei das Telekommunikationsnetzes (100) dafür eingerichtet ist, Datenpakete, die Kommunikationsnutzdateninformationen umfassen, von dem ersten Netzknoten (101) in Richtung des zweiten Netzknotens (102) zu senden, wobei der zweite Netzknoten (102) auf der Basis mindestens eines zweiten Entscheidungsparameters - und für eine gegebene Kommunikationssituation eines einzelnen Datenpaketes oder mehrerer Datenpakete, die in Richtung des zweiten Netzknotens (102) gesendet und durch den zweiten Netzknoten (102) empfangen werden -,
- ein in Betracht gezogenes Datenpaket entweder sendet oder weiterleitet,
- oder ein in Betracht gezogenes Datenpaket abwirft,
- oder die Übertragung oder Weiterleitung eines in Betracht gezogenen Datenpaketes verzögert,
wobei der erste Netzknoten (101) eine erste Entscheidungsvorschrift-Information (105) umfasst, der mindestens eine erste Entscheidungsparameter und eine erste Logik und/oder erste Regeln umfasst, und das Telekommunikationsnetz (100) so eingerichtet ist, dass die gegebene Kommunikationssituation eines einzelnen Datenpaketes oder mehrerer Datenpakete folgendermaßen vermieden wird:
- die Übertragung des in Betracht gezogenen Datenpaketes von dem ersten Netzknoten (101) zu dem zweiten Netzknoten (102) wird für den Fall vermieden, dass das in Betracht gezogene Datenpaket durch den zweiten Netzknoten (102) in der gegebenen Kommunikationssituation abgeworfen worden wäre, und
- die Übertragung des in Betracht gezogenen Datenpaketes von dem ersten Netzknoten (101) zu dem zweiten Netzknoten (102) wird durch den ersten Netzknoten (101) für den Fall verzögert, dass das in Betracht gezogene Datenpaket anderenfalls durch den zweiten Netzknoten (102) verzögert worden wäre,
- die Übertragung des in Betracht gezogenen Datenpaketes von dem ersten Netzknoten (101) zu dem zweiten Netzknoten (102) wird durch den ersten Netzknoten (101) entweder durch Modifizieren des Datenpaketes oder durch Modifizieren seiner Übertragungseigenschaften für den Fall modifiziert, dass das in Betracht gezogene Datenpaket anderenfalls durch den zweiten Netzknoten (102) abgeworfen oder verzögert worden wäre,
wobei der zweite Netzknoten (102) eine zweite Entscheidungsvorschrift-Information (106) umfasst, wobei der zweite Netzknoten (102) dafür eingerichtet ist, die zweite Entscheidungsvorschrift-Information (106) zu dem ersten Netzknoten (101) übermitteln, und/oder wobei ein Serverknoten (107) des Telekommunikationsnetzes (100) dafür eingerichtet ist, die zweite Entscheidungsvorschrift-Information (106) zu dem ersten Netzknoten (101) zu senden, wobei der mindestens eine erste Entscheidungsparameter und/oder die erste Logik und/oder die ersten Regeln dafür eingerichtet sind, an den mindestens einen zweiten Parameter und/oder die zweite Logik und/oder die zweiten Regeln angepasst zu werden für den Fall, dass der mindestens eine zweite Entscheidungsparameter und/oder die zweite Logik und/oder die zweiten Regeln bezüglich einer Behandlung der Datenpakete, die die Kommunikationsnutzdateninformationen umfassen, mindestens ebenso restriktiv sind.

8. Telekommunikationsnetz (100) nach Anspruch 7, wobei der erste Netzknoten (101) und der zweite Netzknoten (102) direkt miteinander verbunden sind.

9. Telekommunikationsnetz (100) nach Anspruch 7, wobei der erste Netzknoten (101) und der zweite Netzknoten (102) über andere Vorrichtungen oder Netzknoten des Telekommunikationsnetzes (100) miteinander verbunden sind, die eine Transportfunktionalität für die Datenpakete bereitstellen.

10. Telekommunikationsnetz (100) nach einem der Ansprüche 7 bis 9, wobei das Telekommunikationsnetz (100) dafür eingerichtet ist, Datenpakete auch von dem zweiten Netzknoten (102) in Richtung des ersten Netzknotens (101) zu senden, wobei der erste Netzknoten (101) auf der Basis mindestens eines anderen Entscheidungsparameters - und für eine gegebene Kommunikationssituation eines einzelnen Datenpaketes oder mehrerer Datenpakete, die in Richtung des ersten Netzknotens (101) gesendet und durch den ersten Netzknoten (101) empfangen werden -,
- ein in Betracht gezogenes Datenpaket entweder sendet oder weiterleitet,
- oder ein in Betracht gezogenes Datenpaket abwirft,
- oder die Übertragung oder Weiterleitung eines in Betracht gezogenen Datenpaketes verzögert,
wobei der zweite Netzknoten (102) die zweite Entscheidungsvorschrift-Information (106) umfasst, die den mindestens einen zweiten Entscheidungsparameter und die zweite Logik und/oder die zweiten Regeln umfasst, und das Telekommunikationsnetz (100) so eingerichtet ist, dass die gegebene Kommunikationssituation eines einzelnen Datenpaketes oder mehrerer Datenpakete folgendermaßen vermieden wird:
- die Übertragung des in Betracht gezogenen Datenpaketes von dem zweiten Netzknoten (102) zu dem ersten Netzknoten (101) wird für den Fall vermieden, dass das in Betracht gezogene Datenpaket anderenfalls durch den ersten Netzknoten (101) in der gegebenen Kommunikationssituation abgeworfen worden wäre, und
- die Übertragung des in Betracht gezogenen Datenpaketes von dem zweiten Netzknoten (102) zu dem ersten Netzknoten (101) durch den zweiten Netzknoten (102) für den Fall verzögert wird, dass das in Betracht gezogene Datenpaket anderenfalls durch den ersten Netzknoten (101) verzögert worden wäre,
- die Übertragung des in Betracht gezogenen Datenpaketes von dem zweiten Netzknoten (102) zu dem ersten Netzknoten (101) durch den zweiten Netzknoten (102) entweder durch Modifizieren des Datenpaketes oder durch Modifizieren seiner Übertragungseigenschaften für den Fall modifiziert wird, dass das in Betracht gezogene Datenpaket anderenfalls durch den ersten Netzknoten (101) abgeworfen oder verzögert worden wäre, wobei der erste Netzknoten (101) dafür eingerichtet ist, die erste Entscheidungsvorschrift-Information (105) zu dem zweiten Netzknoten (102) zu übermitteln, und/oder wobei der Serverknoten (107) des Telekommunikationsnetzes (100) dafür eingerichtet ist, die mindestens eine erste Entscheidungsvorschrift-Information (105) zu dem zweiten Netzknoten (102) zu senden, wobei der mindestens eine zweite Entscheidungsparameter und/oder die zweite Logik und/oder die zweiten Regeln dafür eingerichtet sind, an den mindestens einen ersten Parameter und/oder die erste Logik und/oder die ersten Regeln angepasst zu werden für den Fall, dass der mindestens eine erste Entscheidungsparameter und/oder die erste Logik und/oder die ersten Regeln bezüglich einer Behandlung der Datenpakete, die die Kommunikationsnutzdateninformationen umfassen, mindestens ebenso restriktiv sind.

11. Programm, das einen Computer-lesbaren Programmcode umfasst, der, wenn er auf einem Computer und/oder in einem ersten Netzknoten (101) eines Telekommunikationsnetzes (100) und/oder in einem zweiten Netzknoten (102) des Telekommunikationsnetzes (100), insbesondere zum Teil in dem ersten Netzknoten (101) und zum Teil in dem zweiten Netzknoten (102), ausgeführt wird, den Computer und/oder den ersten und/oder den zweiten Netzknoten (101, 102) des Telekommunikationsnetzes (100) veranlasst, alle Schritte des Verfahrens nach einem der Ansprüche 1 bis 6 auszuführen.

12. Computerprogrammprodukt zur Verwendung eines Telekommunikationsnetzes (100), wobei das Computerprogrammprodukt ein auf einem Speichermedium gespeichertes Computerprogramm umfasst, wobei das Computerprogramm Programmcode umfasst, der, wenn er auf einem Computer und/oder in einem ersten Netzknoten (101) eines Telekommunikationsnetzes (100) und/oder in einem zweiten Netzknoten (102) des Telekommunikationsnetzes (100), insbesondere zum Teil in dem ersten Netzknoten (101) und zum Teil in dem zweiten Netzknoten (102), ausgeführt wird, den Computer und/oder den ersten und/oder den zweiten Netzknoten (101, 102) des Telekommunikationsnetzes (100) veranlasst, alle Schritte des Verfahrens nach einem der Ansprüche 1 bis 6 auszuführen.

## Revendications

1. Procédé pour une communication améliorée entre un premier noeud de réseau (101) d'un réseau de télécommunication (100) et un second noeud de réseau (102) du réseau de télécommunication (100), dans lequel des paquets de données, comprenant des informations de données utiles de communication sont transmis dans la direction allant du premier noeud de réseau (101) vers le second noeud de réseau (102), dans lequel le second noeud de réseau (102), sur la base d'au moins un second paramètre de décision - et pour une situation de communication donnée d'un paquet de données ou d'une pluralité de paquets de données transmis vers le second noeud de réseau (102) et reçus par le second noeud de réseau (102) -,
- soit transmet, soit retransmet un paquet de données considéré,
- soit abandonne un paquet de données considéré,
- soit retarde la transmission ou la retransmission d'un paquet de données considéré,
dans lequel le premier noeud de réseau (101) comprend une première information de politique de décision (105) comprenant au moins un premier paramètre de décision et une première logique et/ou de premières règles de telle sorte que la situation de communication donnée d'un paquet de données ou d'une pluralité de paquets de données est évitée au moyen de
- la transmission du paquet de données considéré à partir du premier noeud de réseau (101) vers le second noeud de réseau (102) est évitée dans le cas où le paquet de données considéré aurait autrement été abandonné par le second noeud de réseau (102) dans la situation de communication donnée, et
- la transmission du paquet de données considéré à partir du premier noeud de réseau (101) vers le second noeud de réseau (102) est retardée par le premier noeud de réseau (101) dans le cas où le paquet de données considéré aurait autrement été retardé par le second noeud de réseau (102),
- la transmission du paquet de données considéré à partir du premier noeud de réseau (101) vers le second noeud de réseau (102) est modifiée par le premier noeud de réseau (101) soit en modifiant le paquet de données, soit en modifiant ses caractéristiques de transmission dans le cas où le paquet de données considéré aurait autrement été abandonné ou retardé par le second noeud de réseau (102),
dans lequel le second noeud de réseau (102) comprend au moins une seconde information de politique de décision (106) comprenant au moins un second paramètre de décision et une seconde logique et/ou de secondes règles, dans lequel le procédé comprend les étapes consistant à :
- communiquer la seconde information de politique de décision (106) au premier noeud de réseau (101) par le second noeud de réseau (102) et/ou par un noeud de serveur (107) du réseau de télécommunication (100) ;
- adapter ledit au moins un premier paramètre de décision et/ou la première logique et/ou les premières règles audit au moins un second paramètre et/ou à la seconde logique et/ou aux secondes règles dans le cas où ledit au moins un second paramètre de décision et/ou la seconde logique et/ou les secondes règles est/sont plus restrictif(s) ou tout aussi restrictif (s) en ce qui concerne un traitement des paquets de données, comprenant les informations de données utiles de communication.

2. Procédé selon la revendication 1, dans lequel le paramètre de décision et/ou l'information de politique de décision sont liés à au moins l'une de ce qui suit :
- une caractéristique du paquet de données considéré, en particulier une caractéristique ou une partie des informations d'en-tête du paquet de données,
- une caractéristique de bande passante requise de la situation de communication basée sur la succession et la synchronisation d'une pluralité de paquets de données,
- une caractéristique de qualité de service requise de la situation de communication basée sur la succession et la synchronisation d'une pluralité de paquets de données.

3. Procédé selon la revendication 1 ou 2, dans lequel le premier noeud de réseau (101) et le second noeud de réseau (102) sont directement reliés l'un à l'autre.

4. Procédé selon la revendication 1 ou 2, dans lequel le premier noeud de réseau (101) et le second noeud de réseau (102) sont reliés l'un à l'autre par l'intermédiaire d'autres dispositifs ou noeuds de réseau du réseau de télécommunication (100) qui fournissent une fonctionnalité de transport pour les paquets de données .

5. Procédé selon l'une des revendications précédentes, dans lequel les paquets de données sont également transmis dans la direction allant du second noeud de réseau (102) vers le premier noeud de réseau (101), dans lequel le premier noeud de réseau (101), sur la base dudit au moins un premier paramètre de décision - et pour une situation de communication donnée d'un paquet de données ou d'une pluralité de paquets de données transmis vers le premier noeud de réseau (101) et reçus par le premier noeud de réseau (101) -,
-- soit transmet, soit retransmet un paquet de données considéré,
-- soit abandonne un paquet de données considéré,
-- soit retarde la transmission ou la retransmission d'un paquet de données considéré,
dans lequel le second noeud de réseau (102) comprend la seconde information de politique de décision (106) comprenant au moins un second paramètre de décision et la seconde logique et/ou les secondes règles, de telle sorte que la situation de communication donnée d'un paquet de données ou d'une pluralité de paquets de données est évitée au moyen de
- la transmission du paquet de données considéré à partir du second noeud de réseau (102) vers le premier noeud de réseau (101) est évitée dans le cas où le paquet de données considéré aurait autrement été abandonné par le premier noeud de réseau (101) dans la situation de communication donnée, et
- la transmission du paquet de données considéré à partir du second noeud de réseau (102) vers le premier noeud de réseau (101) est retardée par le second noeud de réseau (102) dans le cas où le paquet de données considéré aurait autrement été retardé par le premier noeud de réseau (101),
- la transmission du paquet de données considéré à partir du second noeud de réseau (102) vers le premier noeud de réseau (101) est modifiée par le second noeud de réseau (102) soit en modifiant le paquet de données, soit en modifiant ses caractéristiques de transmission dans le cas où le paquet de données considéré aurait autrement été abandonné ou retardé par le premier noeud de réseau (101), dans lequel le procédé comprend les étapes consistant à :
- communiquer ladite au moins une première information de politique de décision (105) au second noeud de réseau (102) par le premier noeud de réseau (101) et/ou par un noeud de serveur (107) du réseau de télécommunication (100) ;
- adapter ledit au moins un second paramètre de décision et/ou la seconde logique et/ou les secondes règles audit au moins un premier paramètre et/ou à la première logique et/ou aux premières règles dans le cas où ledit au moins un premier paramètre de décision et/ou la première logique et/ou les premières règles est/sont plus restrictif(s) ou tout aussi restrictif (s) en ce qui concerne un traitement des paquets de données, comprenant les informations de données utiles de communication.

6. Procédé selon l'une quelconque des revendications précédentes, dans lequel l'information de politique de décision (105) est transmise au premier noeud de réseau (101) d'une manière protégée et/ou dans lequel l'autre information de politique de décision (106) est transmise au second noeud de réseau (102) d'une manière protégée.

7. Réseau de télécommunication (100) pour une communication améliorée entre un premier noeud de réseau (101) du réseau de télécommunication (100) et un second noeud de réseau (102) du réseau de télécommunication (100), le réseau de télécommunication (100) étant configuré pour transmettre des paquets de données, comprenant des informations de données utiles de communication, à partir du premier noeud de réseau (101) vers le second noeud de réseau (102), dans lequel le second noeud de réseau (102), sur la base d'au moins un second paramètre de décision - et pour une situation de communication donnée d'un paquet de données ou d'une pluralité de paquets de données transmis vers le second noeud de réseau (102) et reçus par le second noeud de réseau (102) -,
- soit transmet, soit retransmet un paquet de données considéré,
- soit abandonne un paquet de données considéré,
- soit retarde la transmission ou la retransmission d'un paquet de données considéré,
dans lequel le premier noeud de réseau (101) comprend une première information de politique de décision (105) comprenant au moins un premier paramètre de décision et une première logique et/ou de premières règles et le réseau de télécommunication est configuré de telle sorte que la situation de communication donnée d'un paquet de données ou d'une pluralité de paquets de données est évitée au moyen de
- la transmission du paquet de données considéré à partir du premier noeud de réseau (101) vers le second noeud de réseau (102) est évitée dans le cas où le paquet de données considéré aurait été abandonné par le second noeud de réseau (102) dans la situation de communication donnée, et
- la transmission du paquet de données considéré à partir du premier noeud de réseau (101) vers le second noeud de réseau (102) est retardée par le premier noeud de réseau (101) dans le cas où le paquet de données considéré aurait autrement été retardé par le second noeud de réseau (102),
- la transmission du paquet de données considéré à partir du premier noeud de réseau (101) vers le second noeud de réseau (102) est modifiée par le premier noeud de réseau (101) soit en modifiant le paquet de données, soit en modifiant ses caractéristiques de transmission dans le cas où le paquet de données considéré aurait autrement été abandonné ou retardé par le second noeud de réseau (102),
dans lequel le second noeud de réseau (102) comprend une seconde information de politique de décision (106), dans lequel le second noeud de réseau (102) est configuré pour communiquer la seconde information de politique de décision (106) au premier noeud de réseau (101) et/ou dans lequel un noeud de serveur (107) du réseau de télécommunication (100) est configuré pour transmettre la seconde information de politique de décision (106) au premier noeud de réseau (101), dans lequel ledit au moins un premier paramètre de décision et/ou la première logique et/ou les premières règles sont configurés pour être adaptés audit au moins un second paramètre et/ou à la seconde logique et/ou aux secondes règles dans le cas où ledit au moins un second paramètre de décision et/ou la seconde logique et/ou les secondes règles est/sont plus restrictif(s) ou tout aussi restrictif(s) en ce qui concerne un traitement des paquets de données, comprenant les informations de données utiles de communication.

8. Réseau de télécommunication (100) selon la revendication 7, dans lequel le premier noeud de réseau (101) et le second noeud de réseau (102) sont directement reliés l'un à l'autre.

9. Réseau de télécommunication (100) selon la revendication 7, dans lequel le premier noeud de réseau (101) et le second noeud de réseau (102) sont reliés l'un à l'autre par l'intermédiaire d'autres dispositifs ou noeuds de réseau du réseau de télécommunication (100) qui fournissent une fonctionnalité de transport pour les paquets de données.

10. Réseau de télécommunication (100) selon l'une des revendications 7 à 9, dans lequel le réseau de télécommunication (100) est configuré pour transmettre des paquets de données également à partir du second noeud de réseau (102) vers le premier noeud de réseau (101), dans lequel le premier noeud de réseau (101), sur la base d'au moins un autre paramètre de décision - et pour une situation de communication donnée d'un paquet de données ou d'une pluralité de paquets de données transmis vers le premier noeud de réseau (101) et reçus par le premier noeud de réseau (101) -,
- soit transmet, soit retransmet un paquet de données considéré,
- soit abandonne un paquet de données considéré,
- soit retarde la transmission ou la retransmission d'un paquet de données considéré,
dans lequel le second noeud de réseau (102) comprend la seconde information de politique de décision (106) comprenant au moins un second paramètre de décision et la seconde logique et/ou les secondes règles et le réseau de télécommunication (100) est configuré de telle sorte que la situation de communication donnée d'un paquet de données ou d'une pluralité de paquets de données est évitée au moyen de
- la transmission du paquet de données considéré à partir du second noeud de réseau (102) vers le premier noeud de réseau (101) est évitée dans le cas où le paquet de données considéré aurait autrement été abandonné par le premier noeud de réseau (101) dans la situation de communication donnée, et
- la transmission du paquet de données considéré à partir du second noeud de réseau (102) vers le premier noeud de réseau (101) est retardée par le second noeud de réseau (102) dans le cas où le paquet de données considéré aurait autrement été retardé par le premier noeud de réseau (101),
- la transmission du paquet de données considéré à partir du second noeud de réseau (102) vers le premier noeud de réseau (101) est modifiée par le second noeud de réseau (102), soit en modifiant le paquet de données, soit en modifiant ses caractéristiques de transmission dans le cas où le paquet de données considéré aurait autrement été abandonné ou retardé par le premier noeud de réseau (101), dans lequel le premier noeud de réseau (101) est configuré pour communiquer la première information de politique de décision (105) au second noeud de réseau (102) et/ou dans lequel le noeud de serveur (107) du réseau de télécommunication (100) est configuré pour transmettre ladite au moins une première information de politique de décision (105) au second noeud de réseau (102), dans lequel ledit au moins un second paramètre de décision et/ou la seconde logique et/ou les secondes règles sont configurés pour être adaptés audit au moins un premier paramètre et/ou à la première logique et/ou aux premières règles dans le cas où ledit au moins un premier paramètre de décision et/ou la première logique et/ou les premières règles est/sont plus restrictif (s) ou tout aussi restrictif (s) en ce qui concerne un traitement des paquets de données, comprenant les informations de données utiles de communication.

11. Programme comprenant un code de programme lisible par ordinateur qui, lorsqu'il est exécuté sur un ordinateur et/ou sur un premier noeud de réseau (101) d'un réseau de télécommunication (100) et/ou sur un second noeud de réseau (102) du réseau de télécommunication (100), en particulier en partie sur le premier noeud de réseau (101) et en partie sur le second noeud de réseau (102), amène l'ordinateur et/ou le premier et/ou le second noeud de réseau (101, 102) du réseau de télécommunication (100) à exécuter toutes les étapes du procédé selon l'une des revendications 1 à 6.

12. Produit de programme d'ordinateur pour utiliser un réseau de télécommunication (100), le produit de programme d'ordinateur comprenant un programme d'ordinateur stocké sur un support de stockage, le programme d'ordinateur comprenant un code de programme qui, lorsqu'il est exécuté sur un ordinateur et/ou sur un premier noeud de réseau (101) d'un réseau de télécommunication (100) et/ou sur un second noeud de réseau (102) du réseau de télécommunication (100), en particulier en partie sur le premier noeud de réseau (101) et en partie sur le second noeud de réseau (102), amène l'ordinateur et/ou le premier et/ou le second noeud de réseau (101, 102) du réseau de télécommunication (100) à exécuter toutes les étapes du procédé selon l'une des revendications 1 à 6.
